## Europäisches Patentamt

## European Patent Office

## Office européen des brevets

(11) Veröffentlichungsnummer: **0 112 465
B1**

(12) **EUROPÄISCHE PATENTSCHRIFT**

(45) Veröffentlichungstag der Patentschrift:
05.02.86

(21) Anmeldenummer: **83110900.4**

(22) Anmeldetag: **02.11.83**

(51) Int. Cl.⁴: **C 09 D 11/10, C 08 G 63/46**

(54) **Druckfarbe.**

(30) Priorität: **25.11.82 DE 3243532**

(43) Veröffentlichungstag der Anmeldung:
**04.07.84 Patentblatt 84/27**

(45) Bekanntmachung des Hinweises auf die Patenterteilung:
**05.02.86 Patentblatt 86/6**

(84) Benannte Vertragsstaaten:
**AT BE CH DE FR GB IT LI NL SE**

(56) Entgegenhaltungen:
**EP - A - 0 042 515
GB - A - 870 412**

(73) Patentinhaber: **BASF Farben + Fasern
Aktiengesellschaft, Am Neumarkt 30,
D-2000 Hamburg 70 (DE)**

(72) Erfinder: **Fries, Werner, Dipl.-Chem. Dr.,
Normannenweg 1, D-7252 Weil der Stadt (DE)**
Erfinder: **Klemm, Karl-Wilhelm, Dipl.-Chem. Dr.,
Ahornstrasse 12, D-7000 Stuttgart 70 (DE)**

(74) Vertreter: **Habbel, Hans-Georg, Dipl.-Ing.,
Postfach 3429 Am Kanonengraben 11, D-4400 Münster
(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Druckfarbe zum Bedrucken von Papier, bestehend aus Pigment, einem mit Fettsäuren mit einer Iodzahl unter 20 modifizierten AlkydharzBindemittel und gegebenenfalls weiterem Bindemittel und weiteren üblichen Bestandteilen wie Gleitmitteln, Lösungsmitteln, Verdickungsmitteln und Thixotropierungsmitteln.

Zur Herstellung von Zeitungspapier wird entfärbtes Altpapier in Form eines wäßrigen Preßkuchens mitverwendet. Geeignete Altpapiere sind holzfreies und Illustrationspapier, insbesondere Papier von Büchern, z. B. Telefonbüchern. Die Entfärbung von bedrucktem Altpapier wird auch als Deinking bezeichnet. Die Entfärbbarkeit von bedrucktem Papier hat also an 8edeutung gewonnen, und damit hat das Interesse an Druckfarben, die zu entfärbbaren oder deinkbaren Druckerzeugnissen führen, zugenommen.

Aus der DE-OS 30 23 118 ist eine Druckfarbe bekannt, die als Bindemittel ein mit Ölen, Fettsäuren und/oder Fettalkoholen einer Jodzahl von kleiner als ungefähr 95 modifiziertes Alkydharz enthält. Als Vorteil dieser bekannten Druckfarbe wird eine gute Deinkbarkeit angegeben.

Es hat sich nun gezeigt, daß die in der DE-OS 30 23 118 beschriebene vollständige Entfernung der Druckfarbe beim Deinkverfahren unter Praxisbedingungen nicht erreicht wird. Es ist daher Aufgabe der vorliegenden Erfindung, eine Druckfarbe mit verbesserter Deinkbarkeit anzugeben.

Überraschenderweise wurde gefunden, daß die Deinkbarkeit einer Druckfarbe, die als wesentliches Bindemittel ein mit Fettsäuren modifiziertes Alkydharz enthält, verbessert werden kann, wenn es sich hierbei um ein Epoxidalkydharz handelt.

Gegenstand der Erfindung ist daher eine Druckfarbe der eingangs genannten Art, die dadurch gekennzeichnet ist, daß als Alkydharz ein Epoxidalkydharz mit einer Säurezahl unter 11 in einem Anteil von mindestens 40 Gew.-%, bezogen auf den Gesamtgehalt an Bindemittel, enthalten ist, das hergestellt worden ist durch Umsetzung

a) einer Fettsäure mit 6 - 20 Kohlenstoffatomen oder eines Gemisches derartiger Säuren oder deren Triglyceride,

b) eines Polyols,

c) eines Epoxidharzes mit einem Molekulargewicht von 380 - 2900, einem Epoxidäquivalentgewicht von 175 bis 2050 und einem Esteräquivalentgewicht von 80 bis 200 und

d) einer Dicarbonsäure, wobei der Anteil des Epoxidharzes 1 bis 40 Mol-%, bezogen auf die Summe von Polyol und Epoxidharz, beträgt.

Die Molekulargewichtsangabe bedeutet hier und im folgenden das zahlenmittlere Molekulargewicht.

Vorteilhaft sind als Komponente a) Kokosöl und/oder Palmkernöl bzw. die aus diesen gewonnenen Fettsäuren verwendet worden.

Als Polyol sind vorteilhaft Trimethylolpropan, Glycerin und/oder Pentaerythrit verwendet worden.

Bevorzugte Dicarbonsäuren sind Phthalsäure, Isophthalsäure, Adipinsäure, gesättigte dimere Fettsäuren oder Tetrahydrophthalsäure.

Vorteilhaft weist das Epoxidalkydharz eine OH-Zahl von 50 bis 150 auf.

Als weiteres Bindemittel enthält die Druckfarbe vorteilhaft Kohlenwasserstoffharz in einem Anteil bis zu 60 Gew.-%, bezogen auf den Gesamtgehalt an Bindemittel. Hierdurch wird die Scheuerfestigkeit frisch hergestellter Druckerzeugnisse verbessert, ohne daß die Deinkbarkeit wesentlich verschlechtert wird. Außerdem werden das Nebeln und das Emulgieren der Druckfarbe in der Druckmaschine reduziert.

Die Erfindung betrifft auch ein Verfahren zur Herstellung einer Druckfarbe, bei dem Pigment, ein mit Fettsäuren mit einer Iodzahl unter 20 modifiziertes Alkydharzbindemittel und gegebenenfalls weiteres Bindemittel und weitere übliche Bestandteile wie Gleitmittel, Lösungsmittel, Verdickungsmittel und Thixotropierungsmittel mittels einer Dispergiervorrichtung dispergiert werden. Das erfindungsgemäße Verfahren ist dadurch gekennzeichnet, daß zur Herstellung des Alkydharzbindemittels

a) eine Fettsäure mit 6 bis 20 Kohlenstoffatomen oder ein Gemisch derartiger Säuren oder deren Triglyceride,

b) ein Polyol,

c) ein Epoxidharz mit einem Molekulargewicht von 380 bis 2900, einem Epoxidäquivalentgewicht von 175 bis 2050 und einem Esteräquivalentgewicht von 80 bis 200 und

d) eine Dicarbonsäure miteinander umgesetzt werden, wobei der Anteil des Epoxidharzes 1 bis 40 Mol-%, bezogen auf die Summe von Polyol und Epoxidharz, beträgt.

Als Komponente a) werden bei dem erfindungsgemäßen Verfahren vorteilhaft Kokosöl und/oder Palmkernöl bzw. die aus diesen gewonnenen Fettsäuren verwendet.

Als Polyol werden Trimethylolpropan, Glyzerin und/oder Pentaerythrit bevorzugt, und als Dicarbonsäure werden vorteilhaft Phthalsäure, Isophthalsäure, Adipinsäure, gesättigte dimere Fettsäuren oder Tetrahydrophthalsäure eingesetzt.

Bei der Herstellung der Druckfarbe wird vorteilhaft als weiteres Bindemittel ein Kohlenwasserstoffharz in einem Anteil bis zu 60 Gew.-%, bezogen auf den Gesamtgehalt an Bindemittel, mitverwendet.

Die Erfindung betrifft weiterhin die Verwendung der Druckfarbe für Flach-, Hoch- und Tiefdruck sowie insbesondere die Verwendung einer Druckfarbe, bestehend aus Pigment, einem Epoxidalkydharz-Bindemittel, das durch Umsetzung einer Fettsäure mit 6 bis 20

Kohlenstoffatomen und einer Iodzahl unter 20 oder eines Gemisches derartiger Säuren oder deren Triglyceride, eines Polyols, eines Epoxidharzes mit einem Molekulargewicht von 380 bis 2900, einem Epoxidäquivalentgewicht von 175 bis 2050 und einem Esteräquivalentgewicht von 80 bis 200 und einer Dicarbonsäure erhalten worden ist, wobei der Anteil des Epoxidharzes 1 bis 40 Mol-%, bezogen auf die Summe von Polyol und Epoxidharz, beträgt, gegebenenfalls weiterem Bindemittel und weiteren üblichen Bestandteilen wie Gleitmittel, Lösungsmittel, Verdickungsmittel und Thixotropierungsmittel zur Herstellung von deinkbaren Papierdrucken.

Im folgenden wird die Erfindung an Hand von Ausführungsbeispielen näher erläutert.

Beispiel 1: Herstellung einer Druckfarbe I

Es werden 1.100 Gewichtsteile Kokosfettsäure in einem Reaktor unter schwachem Schutzgasstrom auf 130°C erhitzt. Dann werden 400 Gew.-Teile Trimethylolpropan, 510 Gew.Teile eines handelsüblichen Epoxidharzes mit einem Molekulargewicht von 1400, einem Epoxidäquivalentgewicht von 870 bis 1025 und einem Esteräquivalentgewicht von 175 und 490 Gew.-Teile Phthalsäureanhydrid zusammen mit 160 Gew.-Teilen Xylol als Schleppmittel hinzugegeben. Es wird weiter aufgeheizt, bis das Schleppmittel lebhaft destilliert. Bei dieser Temperatur wird die Veresterungsreaktion fortgesetzt, bis eine Säurezahl unter 11 erreicht ist. Danach wird das Xylol im Vakuum abdestilliert.

Das erhaltene Harz wird in einem Mineralöl mit einem Siedebereich von 230 bis 260°0 gelöst, so daß eine 80 %ige Lösung entsteht. Unter Verwendung dieser Lösung wird mittels einer Dreiwalze eine Druckfarbe folgender Zusammensetzung hergestellt:

Ruß 16 Gew.-Teile
Polyethylenwachs 1 Gew.-Teil
Kokosfett 6 Gew.-Teile
Epoxidharz
(80 %ig in Mineralöl) 66 Gew.-Teile
Mineralöl 11 Gew.-Teile
(Siedebereich 230 - 260°C)

Beispiel 2: Herstellung einer Druckfarbe II

Unter Verwendung des Epoxidalkydharzes gemäß Beispiel 1 wird mittels einer Dreiwalze eine Druckfarbe folgender Zusammensetzung hergestellt:

Ruß 16 Gew.-Teile
Polyethylenwachs 1 Gew.-Teil
Kokosfett 6 Gew.-Teile
Epoxidharz
(SO %ig in Mineralöl) 30 Gew.-Teile
aromatisches Kohlen
wasserstoffharz
(60 %ig in Mineralöl) 36 Gew.-Teile
Mineralöl 11 Gew.-Teile

Das verwendete aromatische Kohlenwasserstoffharz weisteinen Erweichungspunkt von 117 bis 123°C und eine Bromzahl von 15 bis 30 auf. Das verwendete Mineralöl weist einen Siedebereich von 230 bis 260°C auf.

Beispiel 3: Herstellung einer Druckfarbe III

Unter einem Stickstoffstrom werden in einem Reaktor 1150 Gew.-Teile Kokosfett auf 100°C erhitzt. Bei dieser Temperatur werden 350 Gew.-Teile Trimethylolpropan und 1 Gew.-Teil Lithiumstearat zugegeben. Es wird auf 250°C aufgeheizt und bei dieser Temperatur umgeestert. Nach

Abkühlung auf 150 °C werden 509 Gew.-Teile eines Epoxidharzes mit einem Molgewicht von 1400, einem Epoxidäquivalentgewicht von 870 - 1025 und einem Esteräquivalentgewicht von 175, 490 Gew.-Teile Phthalsäureanhydrid und als Schleppmittel 160 Gew.-Teile Xylol zugegeben. Bei lebhaft destillierendem Schleppmittel wird bis zu einer Säurezahl unter 11 verestert. Hierauf werden das Xylol im Vakuum abdestilliert und das Harz SO %ig in Mineralöl gelöst.

Es wird unter Verwendung dieses Epoxidalkydharzes mittels einer Dreiwalze eine Druckfarbe folgender Zusammensetzung hergestellt:

Ruß 16 Gew.-Teile
Polyethylenwachs 1 Gew.-Teil
Kokosfett 6 Gew.-Teile
Epoxidalkydharz
(80 %ig in Mineralöl) 30 Gew.-Teile
Kohlenwasserstoffharz
gem. Beispiel 2 (60 %ig in Mineralöl) 36 Gew.-Teile
Mineralöl 11 Gew.-Teile

Durchführung von Druckversuchen und Deinking der Druckerzeugnisse

Im Offsetdruckverfahren werden unter Verwendung der Druckfarben I, II und III Drucke hergestellt. Als Motiv wird eine Seite eines Telefonbuches gewählt, und es wird auf Telefonbuchpapier beidseitig gedruckt. Die erhaltenen Druckerzeugnisse werden 144 Stunden bei 60°C gealtert. Danach werden die Proben dem Normalklima 23°C/ 50 % relative Luftfeuchtigkeit angeglichen. Nach Zerkleinerung der Proben werden diese einem Flotations-Deinking-Prozeß unterworfen. Hierbei wird das Papier in einem zweistufigen Prozeß desintegriert und mit einer wäßrigen Lösung von Natriumhydroxid, Wasserglas, Ölsäure und Wasserstoffperoxid behandelt. In einer Flotationszelle wird der aufsteigende DruckfarbenSchaum abgetrennt. Aus der zurückbleibenden Suspension werden mittels eine Nutsche Probeblätter hergestellt, die anschließend getrocknet werden. Durch Weißgradmessungen an diesen Probeblättern wird der Grad der Druckfarbenentfernung bestimmt. Hierzu wird der Reflexionsfaktor für eine Schwerpunktwellenlänge von 457 nm gemessen. Die Druckfarbenentfernungs-Maßzahl (DEM) ergibt sich aus Weißgrad-Mittelwerten (WG) der Probeblätter des bedruckten Stoffes (BS), der einer Desintegration ohne Chemiekalienzusatz unterworfen ist, des unbedruckten Stoffes (US), der durch eine Behandlung von unbedruckten Teilen, z.B. Randstreifen, erhalten worden ist und des deinkten Stoffes (DS) nach folgender Formel:

$$DEM \ (\%) = \frac{WG_{DS} - WG_{BS}}{WG_{US} - WG_{BS}} \cdot 100$$

Die mit den Druckfarben I, II und III hergestellten Druckerzeugnisse ergeben folgende Werte der Druckfarbenentfernungs-Maßzahl:

Druckfarbe I DEM = 80 - 84 %
Druckfarbe II DEM = 79 - 83 %
Druckfarbe III DEM = 79 - 83 %.

**Vergleichsbeispiel:**

Dem Beispiel 1 a der DE-OS 30 23 118 entsprechend wird aus 1418 Gewicht steilen Kokosöl, 0,1 Gew.-Teilen Bleiglätte, 448 Gew.-Teilen Trimethylolpropan, 628 Gew.Teilen Isophthalsäure und 5,9 Gew.-Teilen p-Toluolsulfonsäure, unter Verwendung von Xylol als Schleppmittel ein Alkydharz-Bindemittel hergestellt. Dieses wird entsprechend dem Beispiel 2 b der DE-OS 30 23 118 unter Verwendung von Polyethylenwachs, phenolmodifiziertem Mineralöl,löslichem Kolophoniumharz, Gilsonit-Asphalt und Mineralöl zu einer Druckfarbe verarbeitet.

Unter den gleichen Bedingungen wie in den vorstehend beschriebenen Beispielen werden Druckproben hergestellt und deinkt. Hierbei wird eine DruckfarbenentfernungsMaßzahl von 71 bis 72 errreicht.

**Patentansprüche**

1. Druckfarbe zum Bedrucken von Papier, bestehend aus Pigment, einem mit Fettsäuren mit einer Iodzahl unter 20 modifizierten Alkydharz-Bindemittel und gegebenenfalls weiterem Bindemittel und weiteren üblichen Bestandteilen wie Gleitmittel, Lösungsmitteln, Verdickungsmitteln und Thixotropierungsmitteln, dadurch gekennzeichnet, daß als Alkydharz ein Epoxidalkydharz mit einer Säurezahl unter 11 in einem Anteil von mindestens 40 Gew.-%, bezogen auf den Gesamtgehalt an Bindemitteln, enthalten ist, das hergestellt worden ist durch Umsetzung.

a) einer Fettsäure mit 6 bis 20 Kohlenstoffatomen oder eines Gemisches derartiger Säuren oder deren Triglyceride,

b) eines Polyols,

c) eines Epoxidharzes mit einem Molekulargewicht von 380 bis 2900, einem Epoxidäquivalentgewicht von 175 bis 2050 und einem Esteräquivalentgewicht von 80 bis 200 und

d) einer Dicarbonsäure, wobei der Anteil des Epoxidharzes 1 bis 40 Mol-%, bezogen auf die Summe von Polyol und Epoxidharz, beträgt.

2. Druckfarbe nach Anspruch 1, dadurch gekennzeichnet, daß als Komponente a Kokosöl und/oder Palmkernöl bzw. die aus diesen gewonnenen Fettsäuren verwendet worden sind.

3. Druckfarbe nach Anspruch 1 oder 2, dadurch gekennzeichnet, daß als Polyol Trimethvlolpropan, Glycerin und/oder Pentaerythrit verwendet worden sind.

4. Druckfarbe nach Anspruch 1 bis 3, dadurch ge- kennzeichnet, daß als Dicarbonsäure Phtaösäure, Isophtalsäure, Adipinsäure, gesättigte dimere Fettsäuren oder Tetrahydropthalsäure verwendet worden sind.

5. Druckfarbe nach Anspruch 1 bis 4, dadurch ge- kennzeichnet, daß das Epoxidalkydharz eine OHZahl von 50 bis 150 aufweist.

6. Druckfarbe nach Anspruch 1 bis 5, dadurch ge- kennzeichnet, daß als weiteres Bindemittel Kohlenwasserstoffharz in einem Anteil bis zu 60 Gew.-%, bezogen auf den Gesamtgehalt an Bindemitteln, enthalten ist.

7. Verfahren zur Herstellung einer Druckfarbe, bei dem Pigment, ein mit Fettsäuren mit einer Iodzahl unter 20 modifiziertes Alkydharzbindemittel und gegebenenfalls weiteres Bindemittel und weitere übliche Bestandteile wie Gleitmittel, Lösungsmittel, Verdickungsmittel und Thixotropierungsmittel mittels einer Dispergiervorrichtung dispergiert werden, dadurch gekennzeichnet, daß als Alkydharz ein Epoxidalkydharz mit einer Säurezahl unter 11 in einem Anteil von mindestens 40 Gew.-%, bezogen auf den Gesamtgehalt an Bindemitteln eingesetzt wird und zur Herstellung des EpoxidalkydharzBindemittels

a) eine Fettsäure mit 6 bis 20 Kohlenstoffatomen oder ein Gemisch derartiger Säuren oder deren Triglyceride,

b) ein Polyol,

c) ein Epoxidharz mit einem Molekulargewicht von 380 bis 2900, einem Epoxidäquivalentgewicht von 175 bis 2050 und einem Esteräquivalentgewicht von 80 bis 200 und

d) eine Dicarbonsäure

miteinander umgesetzt werden, wobei der Anteil des Epoxidharzes 1 bis 40 Mol-%, bezogen auf die Summe von Polyol und Epoxidharz, beträgt.

8. Verfahren nach Anspruch 7, dadurch gekennzeich- net, daß als Komponente a Kokosöl und/oder Palmkernöl bzw. die aus diesen gewonnenen Fettsäuren verwendet werden.

9. Verfahren nach Anspruch 7 oder 8, dadurch ge- kennzeichnet, daß als Polyol Trimethylolpropan, Glycerin und/oder Pentaerythrit verwendet werden.

10. Verfahren nach Anspruch 7 bis 9, dadurch ge- kennzeichnet, daß als Dicarbonsäure Phthalsäure, Isophthalsäure, Adipinsäure, gesättigte dimere Fettsäuren oder Tetrahydrophtalsäure verwendet werden.

11. Verfahren nach Anspruch 7 bis 10, dadurch ge- kennzeichnet, daß das Epoxidalkydharz eine OH-Zahl von 50 bis 150 aufweist.

12. Verfahren nach Anspruch 7 bis 11, dadurch ge- kennzeichnet, daß als weiteres Bindemittel Kohlenwasserstoffharz in einem Anteil bis zu 60 Gew.-%,bezogen auf den Gesamtgehalt an Bindemitteln, verwendet wird.

13. Verwendung der Druckfarbe nach Anspruch 1 bis 6 für Flach-, Hoch- oder Tiefdruck.

14. Verwendung einer Druckfarbe, bestehend aus Pigment, einem Epoxidalkydharz-Bindemittel mit einer Säurezahl unter 11 in einem Anteil von mindestens 40 Gew.-%, bezogen auf den Gesamtgehalt an Bindemitteln, das durch Umsetzung einer Fettsäure mit 6 bis 20 Kohlenstoffatomen und einer Iodzahl unter 20 oder eines Gemisches derartiger Säuren oder deren Triglyceride, eines Polyols, eines Epoxidharzes mit einem Molekulargewicht von 380 bis 2900, einem Epoxidäquivalentgewicht von 175 bis 2050 und einem Esteräquivalentgewicht von 80 bis 200 und einer Dicarbonsäure erhalten worden ist, wobei der Anteil des Epoxidharzes 1 bis 40 Mol-%, bezogen auf die Summe von Polyol und Epoxidharz, beträgt, gegebenenfalls weiterem Bindemittel und weiteren üblichen Bestandteilen wie Gleitmitteln, Lösungsmitteln, Verdickungsmitteln und Thixotropierungsmitteln zur Herstellung von deinkbaren Papierdrucken.


**Revendications**

1.- Encre d'imprimerie pour imprimer du papier, formée de pigment, d'un liant de résine alkyde modifié par des acides gras ayant un indice d'iode inférieur à 20 et éventuellement d'autres liants et d'autres constituants usuels tels que des lubrifiants, solvants, épaississants et agents de thixotropie, caractérisée par le fait que comme résine alkyde on utilise une résine alkyde d'époxyde ayant un indice d'acide inférieur à 11, à raison d'au moins 40 % en poids relativement à la teneur totale en liant, que l'on a préparée en faisant réagir:

a) un acide gras de 6 à 20 atomes de carbone ou un mélange d'acides de ce genre ou de leurs triglycérides,

b) un polyol,

c) une résine d'époxyde ayant un poids moléculaire de 3S0 à 2 900, un poids équivalent époxyde de 175 à 2 050 et un poids équivalent ester de 80 à 200, et

d) un acide dicarboxylique, la proportion de la résine d'époxyde étant de 1 à 40 mol. % relativement à la somme du polyol et de la résine d'époxyde.

2.- Encre d'imprimerie selon la revendication 1, caractérisée par le fait que comme constituant a) on a utilisé l'huile de coco et/ou l'huile de palmiste ou les acides gras tirés de celles-ci.

3.- Encre d'imprimerie selon l'une des revendications 1 et 2, caractérisée par le fait que comme polyol, on a utilisé le triméthylolpropane, le glycérol et/ou le pentaérythritol.

4.- Encre d'imprimerie selon l'une des revendications 1 à 3, caractérisée par le fait que comme acide dicarboxylique, on a utilisé l'acide phtalique, l'acide isophtalique, l'acide adipique, des acides gras dimères saturés ou l'acide tétrahydrotéréphtalique.

5.- Encre d'imprimerie selon l'une des revendications 1 à 4, caractérisée par le fait que la résine alkyde d'époxyde présente un indice OH de 50 à 150.

6.- Encre d'imprimerie selon l'une des revendications 1 à 5, caractérisée par le fait que comme autre liant on utilise une résine d'hydrocarbure en proportion allant jusqu'à 60 % en poids, relativement à la teneur totale en liants.

7.- Procédé de préparation d'une encre d'impression dans lequel on disperse, au moyen d'un dispositif de dispersion, du pigment, un liant de résine alkyde modifié par des acides gras ayant un indice d'iode inférieur à 20 et éventuellement un autre liant et d'autres constituants usuels tels que des lubrifiants, solvants, épaississants et agents de thixotropie, caractérisé par le fait que comme résine alkyde on utilise une résine alkyde d'époxyde ayant un indice d'acide inférieur à 11, à raison d'au moins 40 % en poids relativement à la teneur totale en liants, et que pour la preparation du liant de résine alkyde d'époxyde, on fait réagir entre eux:

a) un acide gras de 6 à 20 atomes de carbone ou un mélange d'acides de ce genre ou de leurs triglycérides,

b) un polyol,

c) une résine d'époxyde ayant un poids moléculaire de 380 à 2 900, un poids équivalent époxyde de 175 à 2 050 et un poids équivalent ester de 80 à 200, et

d) un acide dicarboxylique, la proportion de la résine d'époxyde étant de 1 à 40 mol. %, relativement à la somme du polyol et de la résine d'époxyde.

8.- Procédé selon la revendication 7, caractérisé par le fait que comme constituant a), on utilise l'huile de coco et/ou l'huile de palmiste ou les acides gras tirés de cellesci.

9.- Procédé selon l'une des revendications 7 et 8, caractérisé par le fait que comme polyol, on utilise le triméthylolpropane, le glycérol et/ou le pentaérythritol.

10.- Procédé selon l'une des revendications 7 à 9, caractérisé par le fait que comme acide dicarboxylique, on utilise l'acide phtalique, l'acide isophtalique, l'acide adipique, des acides gras dimères saturés ou l'acide tétrahydrophtalique.

11.- Procédé selon l'une des revendications 7 à 10, caractérisé par le fait que la résine alkyde d'époxyde présente un indice OH de 50 à 150.

12.- Procédé selon l'une des revendications 7 à 11, caractérisé par le fait que comme autre liant, on utilise une résine d'hydrocarbure en proportion allant jusqu'à 60 % en poids, relativement à la teneur totale en liants.

13.- Utilisation de l'encre d'imprimerie selon l'une des revendications 1 à 6, pour l'impression planographique, typographique ou en creux.

14.- Utilisation d'une encre d'imprimerie formée de pigment, d'un liant de résine alkyde d'époxyde ayant un indice d'acide inférieur à 11, à raison d'au moins 40 % en poids, relativement à la teneur totale en liants, que l'on a obtenue en faisant réagir un acide gras de 6 à 20 atomes de carbone ayant un indice d'iode inférieur à 20 ou un mélange d'aoides de ce genre ou de leurs triglycérides, un polyol, une résine d'époxyde ayant un poids moléculaire de 380 à 2 900, un poids équivalent époxyde de 175 à 2 050 et un poids équivalent ester de 80 à 200, et un acide dicarboxylique, la proportion de la résine d'époxyde étant de 1 à 40 mol. %, relativement à la somme du polyol et de la résine d'époxyde, éventuellement un autre liant et d'autres constituants usuels tels que des lubrifiants, solvants, épaississants et agents de thixotropie, pour la réalisation d'impressions sur papier pouvant être désencrées.

## Claims

1. A printing ink which is for printing paper and which consists of pigment, an alkyd resin binder which has been modified with fatty acids having an iodine number below 20, and, if desired, further binder and further customary constituents, such as lubricants, solvents, thickeners and thixotropic agents, which contains, as the alkyd resin, at least 40% by weight, based on total binder content, of an epoxy alkyd resin which has an acid number below 11 and which has been prepared by reacting
   a) a fatty acid of 6 - 20 carbon atoms or a mixture of such acids or triglycerides thereof,
   b) a polyol,
   c) an epoxy resin having a molecular weight of 3802,900, an epoxide equivalent weight of 175 to 2,050 and an ester equivalent weight of 80 to 200 and
   d) a dicarboxylic acid, the proportion of the epoxy resin amounting to 1 to 40 mole %, based on the total amount of polyol and epoxy resin.

2. A printing ink as claimed in claim 1, wherein component a used was coconut oil and/or palmkernel oil or the fatty acids obtained therefrom.

3. A printing ink as claimed in claim 1 or 2, wherein the polyol used was trimethylolpropane, glycerol and/or petaerythritol.

4. A printing ink as claimed in claims 1 to 3, wherein the dicarboxylic acid used was phthalic acid, isophthalic acid, adipic acid, saturated dimeric fatty acids or tetrahydrophthalic acid.

5. A printing ink as claimed in claims 1 to 4, wherein the epoxy alkyd resin has an OH number of 50 to 150.

6. A printing ink as claimed in claims 1 to 5, which contains, as further binder, up to 60% by weight, based on the total binder content, of hydrocarbon resin.

7. A process for preparing a printing ink by dispersing, by means of a dispersing device, pigment, an alkyd resin binder which has been modified with fatty acids having an iodine number below 20, and, if desired, further bioder and further customary constituents, such as lubricants, solvents, thickeners and thixotropic agents, which comprises preparing the alkyd resin binder by reacting with one another
   a) a fatty acid of 6 - 20 carbon atoms or a mixture of such acids or triglycerides thereof,
   b) a polyol,
   c) an epoxy resin having a molecular weight of 3802,900, an epoxide equivalent weight of 175 to 2,050 and an ester equivalent weight of 80 to 200 and
   d) a dicarboxylic acid, the proportion of the epoxy resin amounting to 1 to 40 mole %, based on the total amount of polyol and epoxy resin.

8. A process as claimed in claim 7, wherein component a used is coconut oil and/or palmkernel oil or fatty acids obtained therefrom.

9. A process according to claim 7 or 8, wherein the polyol used is trimethylolpropane, glycerol and/or pentaerythritol.

10. A process as claimed in claims 7 to 9, wherein the dicarboxylic acids used are phthalic acid, isophthalic acid, adipic acid, saturated dimeric fatty acids or tetrahydrophthalic acid.

11. A process as claimed in claims 7 to 10, wherein the epoxy alkyd resin has an OH number of 50 to 150.

12. A process as claimed in claims 7 to 11, wherein the further binder used is a hydrocarbon resin in an amount of up to 60% by weight, based on the totäl binder content.

13. Use of a printing ink as claimed in claims 1 to 6, for planographic, relief or gravure printing.

14. Use of a printing which consists of pigment, an epoxy alkyd resin binder which has been obtained by reacting a fatty acid of 6 - 20 carbon atoms and having an iodine number below 20 or a mixture of such acids or triglycerides thereof, a polyol, an epoxy resin having a molecular weight of 380 - 2,900, an epoxide equivalent weight of 175 to 2,050 and an ester equivalent weight of 80 to 200 and a dicarboxylic acid, the proportion of the epoxy resin amounting to 1 to 40 mole %, based on the total amount of polyol and epoxy resin, and, if desired, further binder and further customary constituents, such as lubricants, solvents, thickeners and thixotropic agents, for preparing deinkable prints on paper.